(19) Europäisches Patentamt

European Patent Office

Office européen des brevets

(11) Numéro de publication: **0 267 120 B1**

(12) **FASCICULE DE BREVET EUROPEEN**

(45) Date de publication de fascicule du brevet:
03.04.91

(51) Int. Cl.⁵: **C03B 35/16, B65G 49/06**

(21) Numéro de dépôt: 87402494.6

(22) Date de dépôt: 05.11.87

(54) **Positionnement de plaques de verre en vue notamment de leur bombage.**

(30) Priorité: 06.11.86 FR 8615488

(43) Date de publication de la demande:
11.05.88 Bulletin 88/19

(45) Mention de la délivrance du brevet:
03.04.91 Bulletin 91/14

(84) Etats contractants désignés:
AT BE CH DE ES FR GB IT LI LU NL SE

(56) Documents cités:
EP-A- 0 003 391
EP-A- 0 146 442
US-A- 3 992 182

(73) Titulaire: **SAINT-GOBAIN VITRAGE INTERNA-
TIONAL**
**18, avenue d'Alsace**
**F-92400 Courbevoie(FR)**

(72) Inventeur: **Gonzales-Blasquez, Ignacio**
**Junquillos No 4**
**La Muntanyeta El Vendrell Tarragone(ES)**
Inventeur: **Letemps, Bernard**
**5, Avenue du Gros Buisson**
**F-60150 Thourotte(FR)**
Inventeur: **Blanchard, René**
**76, rue Lutas**
**F-59580 Aniche(FR)**
Inventeur: **Mathivat,Denis**
**7, Avenue du Gros Buisson**
**F-60150 Thourotte(FR)**
Inventeur: **Boutier, Philippe**
**8, Route Nationale**
**F-60150 Thourotte(FR)**

(74) Mandataire: **Leconte, Jean-Gérard et al**
**Saint-Gobain Recherche 39, Quai Lucien Lefranc**
**F-93304 Aubervilliers Cedex(FR)**

## Description

La présente invention concerne le positionnement de plaques de verre défilant à plat sur un convoyeur en vue notamment de leur bombage.

Pour pouvoir fournir des plaques de verre correctement bombées, il importe d'abord que lesdites plaques de verre soient correctement positionnées par rapport aux outils de bombage. Ceci est général et intéresse toutes les techniques de bombage, mais doit plus particulièrement être respecté lorsqu'est mise en oeuvre la technique de bombage selon laquelle les plaques de verre sont appliquées contre un élément supérieur, généralement en forme, dont elles épousent le profil, pour être relachées ensuite, éventuellement sur un élément inférieur de bombage complémentaire disposé en-dessous de l'élément supérieur, sur lequel se fait ou se poursuit la mise en forme des plaques de verre.

Pour que la courbure prise par les plaques de verre soit correcte, il importe de les positionner de façon précise par rapport à l'élément supérieur et éventuellement aussi par rapport à l'élément in férieur de bombage complémentaire.

En outre, pour augmenter les capacités de fabrication, plusieurs plaques de verre peuvent être traitées simultanément et dans ce cas il importe non seulement de bien positionner les plaques de verre par rapport aux outils de bombage, mais également les unes par rapport aux autres.

Il est connu d'orienter correctement des plaques de verre avant leur enfournement dans un four de réchauffage en vue du bombage, par exemple par une action manuelle ou en guidant leur bord latéral par une règle correctement orientée disposée le long du convoyeur d'enfournement.

Il a été également proposé selon US-A-3 992 182 des moyens d'orientation des plaques de verre qui opèrent dans le four de réchauffage à proximité de sa sortie. Ces moyens d'orientation sont constitués par des poussoirs latéraux qui se déplacent parallèlement à la direction d'avancée des plaques de façon à minimiser le marquage des plaques. Ce système ne résoud toutefois pas le problème du positionnement frontal des plaques de verre.

Il est également connu d'utiliser des moyens optiques de détection des arêtes avant des plaques de verre, couplés avec l'entraînement du convoyeur et qui peuvent donc déclencher l'arrêt des plaques de verre lorsqu'elles arrivent sous le ou les éléments supérieur (s) éventuellement en forme contre lequel (ou lesquels) elles seront ultérieurement appliquées.

Cependant, ces moyens de positionnement sont insuffisants et imprécis. En effet, au cours de son transport tout au long du four de réchauffage une plaque de verre glisse plus ou moins sur le convoyeur d'amenée et le réglage de position qu'elle a subi à l'entrée n'est plus forcément valable à l'arrivée sous les outils de bombage.

En outre, les réglages de position faits sur du verre froid ne restent pas toujours valables sur du verre chaud qui a pu se déformer.

Par ailleurs, les arrêts du verre par des détecteurs optiques relayés par électronique dans des ambiances chaudes ne sont pas suffisamment précis et ne permettent en tous cas pas d'atteindre des précisions de l'ordre de celles qui sont actuellement demandées, à savoir de l'ordre de 1/10 mm.

La présente invention vise à fournir des moyens qui permettent d'obtenir un positionnement précis de plaques de verre sur un convoyeur notamment en regard d'outils de bombage.

Pour cela, elle propose un procédé de bombage de plaques de verre comportant une action de positionnement dans le four de réchauffage qui précède le four de bombage, opérée alors que les plaques de verre défilent à plat sur un convoyeur, cette action de positionnement consistant en une orientation des plaques de verre par butée du bord avant contre un volet ou des doigts escamotables à position réglable disposés en travers du convoyeur, ledit volet ou lesdits doigts retenant les plaques de verre et le convoyeur continuant à les entraîner pour les obliger à aligner leur bord avant par rapport audit volet ou auxdits doigts, à un moment où le verre est à une température homogène comprise entre 450 et 575° C, de préférence entre 475 et 550° C et avantageusement autour de 500° C, c'est-à-dire suffisamment basse pour minimiser les risques de collage.

Avantageusement ce procédé de bombage comporte également une orientation des plaques de verre par des pousseurs agissant sensiblement perpendiculairement à la direction d'avancement du convoyeur.

De préférence, l'invention propose de supporter les plaques de verre pendant cette opération d'orientation, par des rouleaux revêtus de gaines en fils de silice ou de verre tressés ou tricotés.

L'invention propose également un dispositif de bombage pour mettre en oeuvre ce procédé, comportant notamment un four de réchauffage que les plaques de verre traversent en défilant à plat sur un convoyeur, des moyens d'orientation des plaques de verre constitués par un volet ou des doigts escamotables montés sur une base disposée au travers du convoyeur aptes à retenir les plaques de verre pendant que le convoyeur continue à fonctionner, les obligeant à aligner leur bord avant suivant les doigts ou le volet, les-dits moyens d'orientation étant placés dans le four de réchauffage, environ aux 2/3 de sa longueur après l'entrée, dans une zone où le verre est à une température comprise entre 450 et 575° C, de préférence entre 475 et 550° C et avantageusement autour de 500° C.

L'invention sera maintenant décrite plus en détail en référence aux figures jointes qui représentent :

figure 1 : une vue d'ensemble d'une installation de bombage utilisant des éléments inférieurs et supérieurs de bombage,

figure 2 : une vue schématique d'un moyen d'orientation par butée escamotable et guidage latéral des plaques de verre,

figure 3 : une vue schématique d'un moyen d'orientation par volet escamotable disposé en travers du convoyeur,

figure 4 : une vue schématique de pousseurs latéraux,

figure 5 : une vue schématique d'un moyen d'arrêt des feuilles de verre comportant un doigt détecteur apte à être basculé par les feuilles de verre, et à déclencher, par le biais de moyens électroniques, l'arrêt du convoyeur.

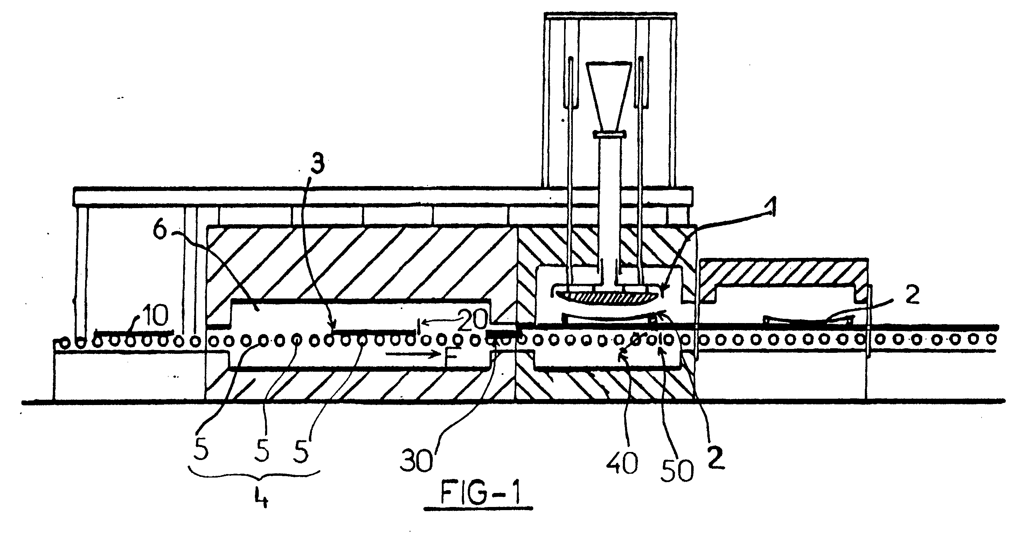

La figure 1 est une vue schématique d'une installation de bombage de plaques de verre, ayant des outils de bombage constitués par un élément supérieur 1 et par un élément inférieur 2.

Dans une telle installation, des plaques de verre 3 à bomber, arrivent à plat sur un convoyeur 4, par exemple à rouleaux 5, après avoir été réchauffées à température de bombage et de trempe dans un four 6. Elles s'arrêtent sous l'élément supérieur 1, sont prises en charge par cet élément 1 ou sont appliquées contre lui par exemple à l'aide d'un courant d'air chaud ascendant comme décrit dans le document de brevet européen publié sous le n° 169 770. Cet élément supérieur 1 peut être un simple moyen de transfert du verre en vue de le déposer ensuite sur l'élément inférieur 2 qui dans ce cas est un élément à profil courbe, par exemple un cadre de bombage ouvert en son centre.

Cet élément supérieur 2 peut dans d'autres cas être un élément profil courbe, soit pour permettre un prébombage du verre, celui-ci étant ensuite déposé sur l'élément inférieur 2 qui est alors l'élément de bombage final et définitif, soit pour permettre le bombage total et définitif du verre, l'élément inférieur 2 n'étant plus dans ce cas qu'un moyen d'évacuation du verre bombé en dehors du poste de bombage.

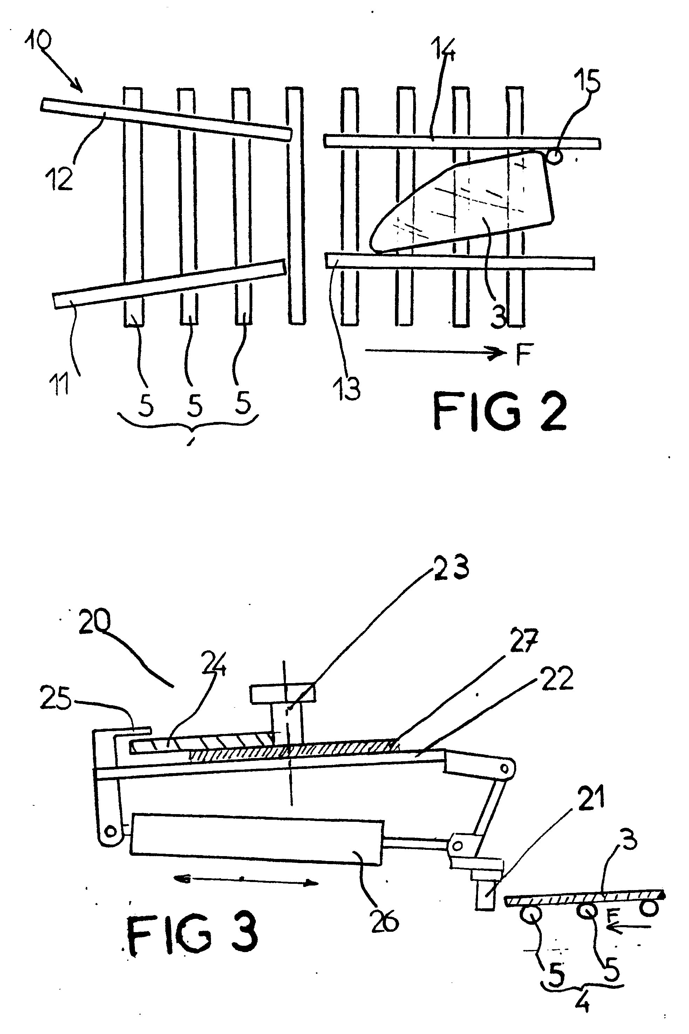

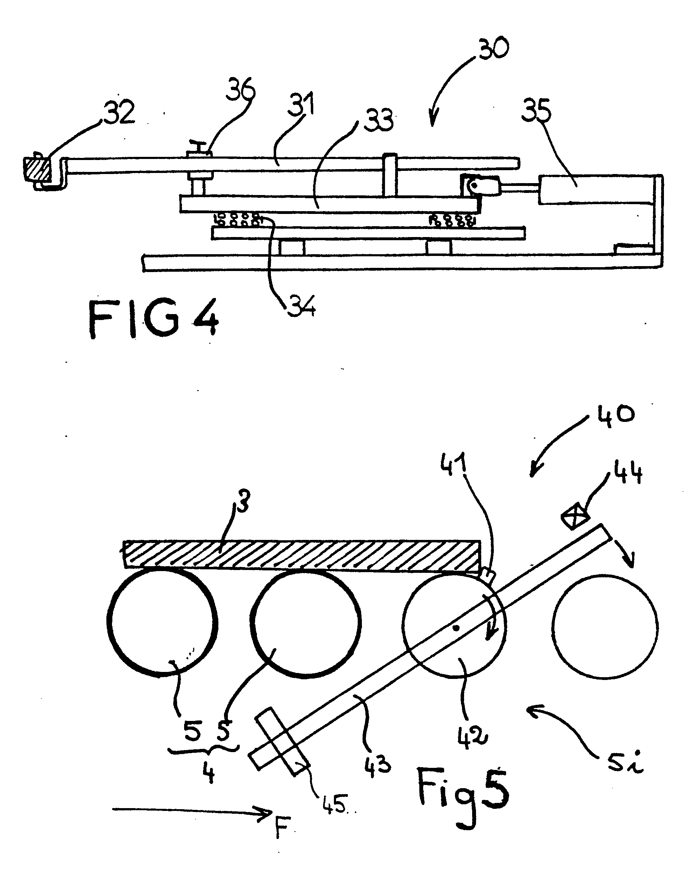

En vue de positionner précisément le verre 3 par rapport aux moyens de bombage, différents moyens de positionnement sont utilisables : les moyens globalement référencés 10 constitués essentiellement par des guides latéraux du verre 3, représentés sur la figure 2 et disposés en amont du four 6, des moyens globalement référencés 20, constitués essentiellement par un volet en travers du convoyeur disposés à l'intérieur du four 6, représentés sur la figure 3, des pousseurs latéraux globalement référencés 30, des moyens référencés 40, constitués essentiellement par un doigt détecteur escamotable porté par un rouleau du convoyeur, disposés dans la cellule de bombage, représentés sur la figure 4, des moyens référencés 50 constitués par des butées associées aux outils de bombage.

Les moyens de positionnement 10 montrés figure 2 comprennent essentiellement des règles de guidage 11, 12, 13, 14 disposées latéralement par rapport au trajet du convoyeur 4 et une butée 15 d'arrêt des plaques de verre 3, escamotable, disposée à proximité de l'une des règles les plus en aval par exemple la règle 14. Cette butée 15 s'escamote par exemple sous l'action d'un vérin non représenté. Les règles 11 et 12 disposées le plus en amont encadrent le convoyeur 4 et elles limitent un passage pour les plaques de verre 3, qui va en se resserrant au fur et à mesure que l'on progresse dans le sens d'avancement du convoyeur 4 défini par la flèche F.

Ces deux règles 11 et 12 sont prolongées par les deux règles 13 et 14 peu ou pas inclinées par rapport à la direction d'avancement du convoyeur, et dont l'écartement réglable en fonction de chaque modèle de feuille de verre correspond à l'encombrement en largeur des feuilles de verre lorsqu'elles ont l'orientation voulue.

Pour faire acquérir à ces feuilles de verre cette orientation voulue, la butée 15 est mise en position active, c'est-à-dire qu'une feuille de verre 3 arrivant sur le convoyeur 4 la heurte nécessairement par une extrémité de son bord avant. Les rouleaux 5 du convoyeur 4 continuant à être entraînés la feuille de verre va s'orienter jusqu'à venir toucher par son coin opposé à celui bloqué par la butée 15 la règle 13 en regard de la règle 14 à proximité de laquelle est disposée la butée 15. Cette orientation voulue de la feuille de verre 3 étant acquise, la butée 15 est escamotée et la feuille de verre poursuit son trajet sur le convoyeur 4.

Eventuellement pendant cette phase d'arrêt de la feuille de verre des opérations indépendantes du bombage, par exemple marquage du verre par sérigraphie, etc... peuvent être faites.

La feuille de verre correctement orientée pénètre ensuite dans le four de réchauffage 6.

A l'intérieur du four 6 la feuille de verre rencontre le moyen de positionnement 20. Ce moyen peut être complémentaire du moyen 10 décrit précédemment ; il peut vérifier l'orientation du verre déjà acquise précédemment ou l'ajuster au cas où elle aurait été perdue par exemple du fait de glissement sur les rouleaux 5 du convoyeur 4. Il peut aussi remplacer le moyen 10 décrit précédemment. On peut estimer que disposé plus en aval de l'installation, il a plus d'efficacité. Ce moyen 20 comme montré figure 3 est constitué essentiellement par un volet 21 ou une pluralité de doigts tels que 21 montés sur une même barre support 22 disposée au-dessus du convoyeur 4, de façon que les doigts ou le volet 21, en position active puisse arrêter une feuille de verre portée par ledit convoyeur. La position des doigts ou du volet 21 est réglable sur la barre 22, de façon qu'ils interceptent à coup sûr la feuille de verre. La barre 22 est disposée au travers du convoyeur 4 et son orientation par rapport à la direction d'avancement dudit convoyeur est réglable par rotation de l'ensemble suivant un axe vertical 23, la lecture de la position du système se faisant grâce à un repère 24 sur 35 un cadran 25.

La mise en position active ou au contraire l'escamotage des doigts 21 se fait par un vérin 26. L'ensemble du mécanisme est porté par une platine 27 reliée par des pattes d'appui non représentées au bâti général de l'installation.

Ce moyen 20 est disposé à l'intérieur du four 6 à un endroit où la feuille de verre a déjà acquis une température homogène, mais cependant suffisamment près de l'entrée du four pour que la température du verre ne soit pas trop élevée, évitant ainsi le collage du verre sur les rouleaux 5 pendant la retenue du verre par les doigts 21. De préférence ce moyen 20 est disposé dans une zone comprise entre la moitié et les 2/3 de la longueur du four à partir de l'entrée, à un endroit où la température du verre est de l'ordre de 450 à 575° C et de préférence de l'ordre de 475 à 550° C et avantageusement autour de 500° C pour du verre n'ayant reçu aucun revêtement ou traitement et d'environ 3 ou 4mm d'épaisseur. Cette température varie légèrement en fonction du poids et des dimensions des plaques de verre, en fonction d'éventuels traitements préalables du verre, en fonction de l'éventuelle nécessité de disposer plusieurs moyens tels que 20 dans le même four, notamment en vue de positionner et d'espacer plusieurs plaques de verre destinées à être bombées en une même étape grâce à un élément supérieur de bombage et/ou de transfert à plusieurs emplacements capable de bomber simultanément plusieurs plaques de verre.

De préférence pour concourir à éviter ce collage du verre sur les rouleaux 5 du convoyeur 4, lesdits rouleaux sont revêtus d'une gaine tressée ou tricotée en fils de verre ou de silice.

Ce moyen 20 fonctionne de la manière suivante : une feuille de verre 3 arrivant sur le convoyeur 4 est stoppée par la rencontre de son bord avant avec les doigts ou le volet 21. La barre 22 support des doigts ou du volet 21 a précédemment été orientée par rapport à l'axe du convoyeur 4 de façon que les feuilles de verre en butée contre les doigts ou le volet 21, continuant d'être soumises à l'entrainement des rouleaux 5, prennent l'orientation voulue, compatible avec les outils de bombage auxquels elles seront soumises ultérieurement. La position voulue des feuilles de verre en butée contre les doigts ou le volet 21 peut être repérée par des détecteurs non représentés qui commandent la mise en action du vérin d'escamotage 26 lorsque lesdites feuilles de verre ont excité lesdits détecteurs. Suivant une variante, le vérin d'escamotage 26 peut être mis en action pour libérer les feuilles de verre après un temps réglable, déterminé par quelques essais sur des feuille de verre du modèle traité, suffisant pour que l'orientation desdites feuilles de verre ait à coup sûr eu le temps de se faire.

Plusieurs moyens tels que 20 peuvent être disposés à la suite des uns des autres, chacun pouvant agir sur toutes les plaques de verre ou chacun n'étant destiné qu'à agir sur certaines feuilles de verre, laissant alors passer les autres. Ainsi dans le cas déjà évoqué où l'on utilise un élément supérieur de bombage et/ou de transfert à plusieurs emplacements juxtaposés dans la direction de défilement des plaques de verre, il importe d'orienter et de positionner chaque plaque de verre, mais également d'espacer les plaques de verre destinées à être bombées en même temps, les unes par rapport aux autres d'une distance adaptée à la position des emplacements de bombage sur l'élément supérieur de bombage et/ou de transfert.

Les doigts ou le volet 21 s'étant escamotés la feuille de verre correctement orientée poursuit son trajet dans le four avant d'arriver à la cellule de formage.

Sur son trajet elle est soumise à l'action d'autres moyens de centrage, notamment à l'action des moyens 30 essentiellement constitués par des pousseurs latéraux. Ces moyens 30 sont représentés sur la figure 4. Ils comprennent des bras tels que 31 terminés par des galets tels que 32 en une matière résistant à la chaleur et n'abimant pas le verre, montés sur une plateforme 33, disposés latéralement par rapport au convoyeur 4, dirigés suivant une direction approximativement perpendiculaire à la direction du mouvement du convoyeur. La plateforme 33 est montée sur des roulements 34 et elle est solidaire de l'extrémité de la tige d'un vérin 35 attaché au bâti général, de façon à pouvoir se déplacer en direction du convoyeur ou au contraire se reculer. L'allonge de chaque bras 31 est réglable en faisant coulisser les tiges qui constituent lesdits bras dans des coulisses 36 fixées sur la plateforme 33. L'allonge peut être réglée différemment pour chaque bras.

Cet ensemble 30 est avantageusement monté sur des rails non représentés, parallèles au convoyeur et il est entrainé, lorsqu'il est en action, à la vitesse du convoyeur.

Cet ensemble est commandé par un automate. Son temps de fonctionnement est réglable et fonction du modèle de vitrage et de la distance dont on veut repousser ledit vitrage dans la direction transversale par rapport au convoyeur.

Ce temps de fonctionnement ayant été déterminé par quelques essais préalables, cet ensemble est sollicité à l'approche d'une feuille de verre sur le convoyeur. L'approche de la feuille de verre peut être signalée par un détecteur optique qui déclenche la mise en marche de cet ensemble 30. Le vérin 36 repousse alors la plateforme 33 et avec elle les bras 31. Les galets entrent en contact avec la feuille de verre et la repoussent dans la direction transversale par rapport au convoyeur. Le temps de poussage est déterminé pour qu'à la fin la feuille de verre ait la position voulue.

Cet ensemble 30 peut être associé à un soufflage d'air chaud sous la feuille de verre, qui prend en charge une partie seulement du poids de la feuille de verre, et permet de délester en partie les rouleaux 5 du convoyeur, ce qui favorise le glissement de la feuille de verre, sans détériorer sa surface du fait du frottement sur les rouleaux. Cet ensemble 30 peut par exemple être disposé à la sortie immédiate du four 6 de réchauffage du verre.

Les feuilles de verre correctement orientées par rapport à l'axe du convoyeur 4, correctement centrées dans la direction transversale, en particulier grâce à l'action des pousseurs 30 rencontrent ensuite le dispositif 40 illustré figure 4, déjà connu et décrit dans la demande de brevet français 85.13801.

Une description rapide de ce dispositif connu sera seulement reprise ci-après. Ce dispositif 40 est formé par au moins un doigt détecteur 41 faisant saillie au-dessus du plan du convoyeur 4 le long duquel les feuilles de verre sont véhiculées. Ce doigt 41 est porté par une tige 42 parallèle aux rouleaux 5 du convoyeur et dans une version préférée, il s'agit même d'un rouleau 5 non entrainé du convoyeur 4.

Lorsque le bord avant d'une feuille de verre rencontre un doigt 41, elle le repousse et entraine en même temps la rotation de la tige ou rouleau 42, ce qui a pour effet d'escamoter le doigt 41 et de libérer le passage pour la feuille de verre. Cependant une des extrémités de la tige 42 est solidaire d'un bras de levier 43, qui, lorsque le doigt 41 est en position active, repose sur un détecteur de proximité ou micro-contact 44. Au moment où le doigt 41 est touché par la feuille de verre, sa position dans la direction d'avancement du convoyeur est précisément déterminée et on commande l'arrêt du convoyeur avec un retard réglable plus ou moins grand après ce contact avec le doigt 41 concomitant avec le décollement du bras de levier par rapport au micro-contact 44.

Il est ainsi possible d'arrêter les feuilles de verre dans 35 une position précise, à faible distance après le doigt détecteur 41.

Un contre poids 45 de rappel de la tige ou du rouleau 42 en position active est prévu à l'extrémité du levier 43.

Pour une précision encore plus grande, des moyens 50 peuvent encore être prévus, ces moyens étant essentiellement constitués par des butées solidaires des outils de bombage ou le bâti de l'installation et aptes à entrer en contact avec le bord avant des feuilles de verre lorsque celles-ci arrivent sur le convoyeur 4. Ces butées peuvent aussi être constituées par des détecteurs optiques aptes à détecter le bord avant des plaques de verre.

Le positionnement précis des feuilles de verre en regard des outils de bombage, nécessite la mise en oeuvre d'au moins deux de ces moyens ci-dessus décrit, et de préférence plus de deux.

Ce positionnement précis autorise la tenue de tolérances très serrées, même lorsqu'il s'agit de réaliser des vitrages bombés suivant des formes complexes, à fortes flèches, non régulières. Ce positionnement précis décrit en relation avec un bombage à l'aide d'éléments de bombage supérieurs et/ou inférieurs peut également avantageusement être utilisé pour d'autres techniques de bombage du verre circulant à plat 15 sur un convoyeur, ou pour d'autres opérations indépendantes du bombage, par exemple marquage.

## Revendications

1. Procédé de bombage de plaques de verre (3) comportant une action de positionnement dans le four de réchauffage (6) qui précède le four de bombage, opérée alors que les plaques de verre (3) défilent à plat sur un convoyeur (4), **caractérisé en ce que** cette action de positionnement consiste en une orientation des plaques de verre (3) par butée du bord avant contre un volet (2) ou des doigts escamotables à position réglable disposés en travers du convoyeur (4), ledit volet (21) ou lesdits doigts retenant les plaques de verre (3) et le convoyeur (4) continuant à les entraîner pour les obliger à aligner leur bord avant par rapport audit volet (21) ou auxdits doigts, à un moment où le verre est à une température homogène comprise entre 450 et 575°C, de préférence entre 475 et 550°C et avantageusement autour de 500°C, c'est-à-dire suffisamment basse pour minimiser les risques de collage.

**2.** Procédé de bombage selon la revendication 1 ou 2, **caractérisé en ce qu'**en outre on oriente latéralement les plaques de verre (3) par des pousseurs (30) agissant sensiblement perpendiculairement à la direction d'avancement du convoyeur (4).

**3.** Procédé de bombage selon la revendication 1 ou 2, **caractérisé en ce que** les plaques de verre (3) sont transportées sur des rouleaux (5) revêtus d'une gaine en fils de verre ou de silice tressés ou tricotés.

**4.** Dispositif de bombage de plaques de verre (3) comportant notamment un four de réchauffage (6) que les plaques de verre (3) traversent en défilant à plat sur un convoyeur (4), des moyens d'orientation (20) des plaques de verre (3) constitués par un volet (21) ou des doigts escamotables montés sur une base (22) disposée au travers du convoyeur (4) aptes à retenir les plaques de verre (3) pendant que le convoyeur (4) continue à fonctionner, les obligeant à aligner leur bord avant suivant les doigts ou le volet (21), **caractérisé en ce que** lesdits moyens d'orientation (20) sont placés dans le four (6) environ au 2/3 de sa longueur après l'entrée, dans une zone où le verre est à une température comprise entre 450 et 575° C, de préférence comprise entre 475 et 550° C et avantageusement autour de 500° C.

**5.** Dispositif selon la revendication 4, **caractérisé en ce qu'**il comporte en outre des moyens d'orientation (10) disposés en amont du four comportant des règles (14) de guidage latérales par rapport au trajet du convoyeur (4) et au moins une butée (15) d'arrêt du verre située à proximité de l'une des règles (14).

**6.** Dispositif selon l'une des revendications 4 ou 5, **caractérisé en ce qu'**il comporte en outre des pousseurs latéraux (30) agissant dans une direction sensiblement perpendiculaire à la direction d'avancement du convoyeur (4).

**7.** Dispositif selon la revendication 6, **caractérisé en ce qu'**un soufflage d'air chaud apte à prendre en charge une portion seulement du poids des plaques de verre (3) est utilisé sous les pousseurs latéraux (30).

**8.** Dispositif selon l'une des revendications 6 à 7, **caractérisé en ce que** les rouleaux (5) du convoyeur de transport des plaques de verre (3) sont revêtus de gaines en fils de verre ou de silice tressés ou tricotés.

**Claims**

**1.** A method of curving glass plates (3) comprising a positioning action in the heating furnace (6) which precedes the curving furnace, operated while the glass plates (3) move past flat on a conveyor (4), characterized in that this positioning action consists of an orientation of the glass plates (3) by abutment of the front edge against a flap (2) or retractable fingers, adjustable in position, disposed transversely to the conveyor (4), said flap (21) or said fingers retaining the glass plates (3) and the conveyor (4) continuing to entrain them to cause them to align their front edge relative to said flap (21) or said fingers, at a time when the glass is at a homogeneous temperature of from 450 to 575° C, preferably from 475 to 550° C and advantageously around 500° C, that is sufficiently low to minimize the risk of sticking.

**2.** A method of curving according to Claim 1 or 2, characterized in that, in addition, the glass plates (3) are orientated laterally by pushers (30) acting substantially perpendicularly to the direction of advance of the conveyor (4).

**3.** A method of curving according to Claim 1 or 2, characterized in that the glass plates (3) are conveyed on rollers (5) faced with a sheath of braided or knitted glass or silica threads.

**4.** Apparatus for curving glass plates (3) comprising, notably, a heating furnace (6) which the glass plates (3) pass through while flat on a conveyor (4), means (20) for orientating the glass plates (3), constituted of a flap (21) or retractable fingers mounted on a base (22) disposed transversely to the conveyor (4) and adapted for retaining the glass plates (3) while the conveyor (4) continues to operate, causing them to align their front edge in accordance with the fingers or flap (21), characterized in that said orientation means (20) are placed in the furnace (6) approximately at 2/3 of its length after entry, in a zone in which the glass is at a temperature of from 450 to 575° C, preferably from 475 to 550° C and advantageously around 500° C.

**5.** Apparatus according to Claim 4, characterized in that it comprises, in addition, orientation means (10) disposed upstream of the furnace comprising lateral guidance straight-edges (14), lateral with respect to the path of the conveyor (4), and at least one abutment (15) for stopping the glass situated in proximity to one of the straight-edges (14).

6. Apparatus according to one of Claims 4 or 5, characterized in that it comprises, in addition, lateral pushers (30) acting in a direction substantially perpendicular to the direction of advance of the conveyor (4).

7. Apparatus according to Claim 6, characterized in that a blown flow of hot air adapted for lifting only a portion of the weight of the glass plates (3) is used beneath the lateral pushers (30).

8. Apparatus according to one of Claims 6 to 7, characterized in that the rollers (5) of the conveyor for the glass plates (3) are faced with sheaths of braided or knitted glass or silica threads.

## Ansprüche

1. Verfahren zum Biegen von Glasscheiben (3), welches einen Positionierungsvorgang im, dem Biegeofen vorgelagerten Heizofen (6) umfaßt, der durchgeführt wird, während die Glasscheiben (3) auf einem Förderer (4) flach liegend vorbeiziehen,
dadurch **gekennzeichnet**,
daß dieser Positionierungsvorgang eine Ausrichtung der Glasscheiben (3) durch Anschlag mit der vorderen Kante gegen eine Klappe (21) oder lageverstellbare, versenkbare Zapfen, die quer zum Förderer (4) angeordnet sind, umfaßt, wobei die Klappe (21) oder die Zapfen die Glasscheiben (3) halten und der Förderer (4) diese weiter transportiert zum Zwecke der Ausrichtung der vorderen Kante in Bezug auf die Klappe (21) oder die Zapfen, zu einem Zeitpunkt, in dem das Glas eine einheitliche Temperatur zwischen 450 und 575˚ C, vorzugsweise zwischen 475 und 550˚ C und vorteilhafterweise um 500˚ C, aufweist, d.h. niedrig genug, um die Anhaftgefahr zu reduzieren.

2. Verfahren nach Anspruch 1 oder 2, dadurch gekennzeichnet, daß die Glasscheiben (3) ferner durch Drückerelemente (30), die ungefähr senkrecht zur Vorschubrichtung des Förderers (4) wirken, seitlich ausgerichtet sind.

3. Verfahren nach Anspruch 1 oder 2, dadurch gekennzeichnet, daß die Glasscheiben (3) auf Rollen (5) transportiert werden, die mit einem Mantel aus umflochtenen oder gewirkten Glasoder Siliziumoxidfasern überzogen sind.

4. Vorrichtung zum Biegen von Glasscheiben (3), mit insbesondere einem Heizofen (6), den die Glasscheiben (3) beim Vorbeiziehen auf dem Förderer (4) flach liegend durchqueren, und Ausrichtungselementen (20) der Glasscheiben (3), die aus einer Klappe (21) oder versenkbaren Zapfen gebildet sind, die auf einer quer zum Förderer (4) angeordneten Grundplatte (22) angebracht und geeignet sind, die Glasscheiben (3) festzuhalten, während das Förderband (4) weiterläuft und die Scheiben zwingt, ihre vordere Kante mit den Zapfen oder der Klappe (21) auszurichten, **dadurch gekennzeichnet**, daß sich die Ausrichtungselemente (20) im Ofen (6) ungefähr im zweiten Drittel seiner Länge vom Eingang aus in einem Bereich befinden, in welchem das Glas eine Temperatur zwischen 450 und 575˚ C, vorzugsweise zwischen 475 und 550˚ C und vorteilhafterweise um 500˚ C, aufweist.

5. Vorrichtung nach Anspruch 4, **dadurch gekennzeichnet**, daß diese außerdem Ausrichtungselemente (10) umfaßt, die stromaufwärts des Ofens angeordnet sind und die bezüglich der Bahn des Förderers (4) seitliche Führungsschienen (14) sowie mindestens einen Anschlag (15) für das Glas aufweisen, der nahe einer der Schienen (14) angeordnet ist.

6. Vorrichtung nach einem der Ansprüche 4 oder 5, **dadurch gekennzeichnet**, daß diese außerdem seitliche Drückerelemente (30) umfaßt, die in eine ungefähr senkrecht zur Vorschubrichtung des Förderbandes (4) gerichtete Richtung wirken.

7. Vorrichtung nach Anspruch 6, **dadurch gekennzeichnet**, daß ein Anblasen mit warmer Luft unter den seitlichen Drückerelementen (30) verwendet wird, welches geeignet ist, wenigstens einen Gewichtsteil der Glasscheiben (3) zu übernehmen.

8. Vorrichtung nach einem der Ansprüche 6 bis 7, **dadurch gekennzeichnet**, daß die Rollen (5) des die Glasscheiben (3) transportierenden Förderbandes mit einem Mantel aus umflochtenen oder gewirkten Glas- oder Siliziumoxidfasern überzogen sind.

FIG-1

EP 0 267 120 B1

FIG 2

FIG 3

FIG 4

Fig 5